# EUROPEAN PATENT APPLICATION

(11) **EP 4 672 352 A1**
(43) Date of publication of application: **31.12.2025**
(21) Application number: 24866592.9
(22) Date of filing: 04.10.2024
(51) Int. Cl.: H01M 4/13, H01M 4/62, H01M 10/0585, H01M 4/40, H01M 4/38, H01M 10/0562, H01M 10/052, H01M 4/02

(54) **CATHODE-FREE COATING LAYER AND ALL-SOLID-STATE BATTERY COMPRISING SAME**

(30) Priority: 06.11.2023 KR 20230151732
(71) Applicant: LG Energy Solution, Ltd., Seoul 07335 (KR)
(72) Inventor: YOM, Jeeho, Daejeon 34122 (KR); LEE, Dong Chan, Daejeon 34122 (KR); JUNG, Yi Jin, Daejeon 34122 (KR); CHOI, Ran, Daejeon 34122 (KR)
(74) Representative: Goddar, Heinz J.
(86) International application number: PCT/KR2024/015104
(87) International publication number: WO 2025/100746

(57) **Abstract**

The present invention relates to a cathode-free coating layer comprising amorphous carbon and tungsten carbide, and an all-solid-state battery including same. According to the present invention, the cathode-free coating layer, of which degradation in specific capacity and/or capacity retention according to cycle is more controlled than that of a conventional technology, and the all-solid-state battery comprising same can be provided.

## Description

### Technical Field

This application claims the benefit of priority on the basis of Korea Patent Application No. 2023-0151732, filed on 06 November, 2023, and the entire contents disclosed in the Korean Patent Application are incorporated herein as a reference. The present disclosure relates to an anodeless coating layer and an all-solid-state battery including the same.

### Background Art

Recently, all-solid-state batteries with high energy density and safety have been proposed due to industrial demands, and efforts are being conducted to further improve the properties. For example, a method of using lithium as a negative electrode active material is being studied to increase the energy density of an all-solid-state battery.

As a method of using lithium as a negative electrode active material, a method of using lithium or a lithium alloy as a negative electrode active material layer during the manufacturing process of a battery, or a method of forming a lithium layer during a charging process without forming a separate negative electrode active material layer on a negative electrode current collector during the manufacturing process of a battery has been proposed.

However, if lithium is used as a negative electrode active material, lithium (metallic lithium) is precipitated on a negative electrode side during charging, and as charging and discharging processes are repeated, lithium dendrites grow through the gaps in a solid electrolyte layer, which causes defects such as a battery short circuit or reduction in capacity.

Accordingly, in order to commercialize the method of using lithium as a negative electrode active material, there is a need to improve the above defects.

### Disclosure of Invention

### Technical Goals

The present disclosure is for solving the above defects and for providing an anodeless coating layer with improved capacity properties according to cycles, and an all-solid-state battery including the same.

### Technical solutions

An aspect of the present disclosure relates to an anodeless coating layer used in a secondary battery using lithium or a lithium alloy as a negative electrode active material. The anodeless coating layer includes amorphous carbon and tungsten carbide.

In an example embodiment, an average particle diameter of primary particles of the tungsten carbide may be 150 nanometers (nm) or less.

In an example embodiment, the tungsten carbide may be included in 10 to 50 parts by weight relative to 100 parts by weight of the amorphous carbon.

In an example embodiment, a ratio of an average particle diameter of primary particles of the tungsten carbide to the amorphous carbon may be in a range of 1.1 to 5.

In an example embodiment, the anodeless coating layer may further include a lithiophilic element forming an alloy or a compound with lithium.

Another aspect of the present disclosure relates to an all-solid-state battery using lithium or a lithium alloy as a negative electrode active material. The all-solid-state battery includes a positive electrode, a solid electrolyte layer, the anodeless coating layer above, and a negative electrode.

In an example embodiment, the positive electrode may include a positive electrode active material layer, and the positive electrode active material layer may include one or more positive electrode active materials selected from the group consisting of a lithium transition metal oxide, nickel sulfide, copper sulfide, lithium sulfide, iron oxide and vanadium oxide.

In an example embodiment, the solid electrolyte layer may include a sulfide-based solid electrolyte.

In an example embodiment, the sulfide-based solid electrolyte may be one or more selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn, or Ga), Lᵢ₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

In an example embodiment, a thickness of the solid electrolyte layer may be 10 to 100 micrometers (µm).

In an example embodiment, a porosity of the anodeless coating layer may be in a range of 50 to 80 percent (%).

In an example embodiment, as a result of life characteristic evaluation, a capacity retention after 80 cycles may be 90% or more.

In an example embodiment, as a result of life characteristic evaluation, a capacity after 80 cycles may be 175 milliampere-hours per gram mass (mAh/g) or more.

### Effects

According to the present disclosure, an anodeless coating layer with controlled reduction in specific capacity and/or capacity retention according to cycles compared to common ones, and an all-solid-state battery including the same, may be provided.

### Brief Description of Drawings

FIG. 1 is a graph showing evaluation results of capacity retention according to cycles of all-solid-state batteries of the Example, Comparative Example 1 and Comparative Examples 2.
FIG. 2 is a graph showing evaluation results of capacity (specific capacity) according to cycles of all-solid-state batteries of the Example, Comparative Example 1 and Comparative Example 2.

### Best Mode for Carrying Out the Invention

Terms or words used in this specification and claims should not be interpreted as limited to usual or dictionary meanings, and it should be interpreted as having meanings and concepts that are consistent with the technical idea of the present disclosure, based on the principle that an inventor may appropriately define the concepts of terms to best explain the invention.

Therefore, it is understood that the configuration of an example embodiment described in this specification is one of the most desired embodiments of the present disclosure and does not represent the entire technical idea of the present disclosure, so various equivalents and modification embodiments that can replace the embodiments at the time of filing the present application may exist.

In this specification, singular expressions include plural expressions unless the context clearly indicates otherwise.

In this specification, if a part "includes" a certain element, it means that the part may further include other elements rather than excluding other elements, unless specifically stated to the contrary. Accordingly, for example, a composition including compound A may include compounds other than A. However, in certain embodiments, the term "including" also encompasses more limited meanings of "consisting essentially/inherently of" and "consisting of," and for example, "a composition including compound A" may also consist (essentially/inherently) of compound A.

In connection with this, as used in this specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary member is located "on" another arbitrary member, not only a case where such member is in contact with another member, but also a case where another member or substance exists between the two members are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in this specification, in cases where the measurement temperature affects the relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. Additionally, unless otherwise specified, the unit of the temperature in this specification is °C.

In addition, among the physical properties referred to in this specification, in cases where the measurement pressure affects the relevant physical properties, unless otherwise specified, the physical properties are measured at normal pressure, that is, atmospheric pressure (about 1 atm).

An aspect of the present disclosure relates to an anodeless coating layer.

In this specification, an "anodeless coating layer" means a coating layer formed between a negative electrode current collector and a solid electrolyte layer, or, if a negative electrode current collector is absent, on one side of the solid electrolyte layer, in an all-solid-state battery in which lithium is absorbed into the anodeless coating layer during charging and, after the charge capacity of the anodeless coating layer is exceeded, lithium is deposited between the negative electrode current collector and the anodeless coating layer, or if the negative electrode current collector is absent, on one side of the anodeless coating layer opposite to a solid electrolyte layer, to form a metal layer, and lithium in the anodeless coating layer and a lithium metal layer is ionized and moves toward a positive electrode during discharging. The anodeless coating layer may differ from a common negative electrode active material layer in its configuration and operating mechanism. The anodeless coating layer may act as a protective layer for the lithium metal layer by covering the lithium metal layer during the charging process and may suppress the growth of lithium dendrite precipitation, thereby suppressing the short-circuit and capacity reduction and improving performance of the all-solid-state battery.

The present disclosure may relate to an anodeless coating layer used in a secondary battery using lithium or a lithium alloy as a negative electrode active material, and to an anodeless coating layer including amorphous carbon and tungsten carbide.

According to the present disclosure, among numerous tungsten carbide materials, tungsten carbide is particularly selected and combined with amorphous carbon, and the resultant is introduced into the anodeless coating layer, thereby improving Li ion conductivity while suppressing the volume expansion of an electrode, and thus providing an anodeless coating layer having excellent capacity characteristics according to cycles.

Meanwhile, lithiophilic elements that form an alloy or a compound with lithium, such as silver (Ag), have generally been considered essential components for allowing lithium ions to be charged in the anodeless coating layer during charging a battery, and/or for allowing lithium ions to form a lithium metal layer on the opposite side of the surface facing the solid electrolyte layer of the anodeless coating layer. Accordingly, in the negative electrode including the anodeless coating layer, the lithiophilic element is included in the inside of the anodeless coating layer or on at least one surface of the anodeless coating layer. However, the present disclosure has confirmed that even if the lithiophilic element is not included in the anodeless coating layer and/or on at least one surface of the anodeless coating layer, excellent performance or life characteristics may be exhibited, and completed the invention of the present disclosure. However, the present disclosure does not completely exclude the inclusion of the lithiophilic element in an all-solid-state battery. The excellent performance or life characteristics of the present disclosure may be further improved through the combination of the configurations described below.

The average particle diameter of the primary particles of the tungsten carbide may be, for example, 150 nanometers (nm) or less. The average particle diameter may be measured by a method according to the evaluation example described later. The average particle diameter of the primary particles of the tungsten carbide may be, in another example embodiment, 140 nm or less, 130 nm or less, 120 nm or less, 110 nm or less, 100 nm or less, or 90 nm or less, or 10 nm or more, 20 nm or more, 30 nm or more, 40 nm or more, 50 nm or more, 60 nm or more, or 70 nm or more. The anodeless coating layer of the present disclosure includes the tungsten carbide having the above-mentioned average particle diameter of the primary particles, and may improve battery specific capacity and capacity retention according to cycles.

The anodeless coating layer of the present disclosure may include, for example, two or more types of tungsten carbide having different average particle diameters. Unless specifically stated otherwise in the present specification, the average particle diameter may include the average particle diameter of primary particles and/or the average particle diameter of secondary particles. If the anodeless coating layer includes two or more types of tungsten carbide having different average particle diameters, the ratio of the average particle diameters between the two arbitrarily selected types of tungsten carbide may be, for example, in the range of 0.01 to 100, and in another example embodiment, in the range of 0.1 to 10, in the range of 0.5 to 5, or in the range of 0.8 to 3. As the anodeless coating layer of the present disclosure includes tungsten carbide having different average particle diameters as described above, the pores of the anodeless coating layer may be reduced, thereby further improving conductivity.

The anodeless coating layer of the present disclosure may be characterized by, for example, containing 10 to 50 parts by weight of the tungsten carbide relative to 100 parts by weight of the amorphous carbon. In another example embodiment, the tungsten carbide may be contained in an amount of 15 parts by weight or more, 20 parts by weight or more, 25 parts by weight or more, or 30 parts by weight or more, or 45 parts by weight or less, 40 parts by weight or less, or 35 parts by weight or less relative to 100 parts by weight of the amorphous carbon. The anodeless coating layer of the present disclosure may improve conductivity and control the occurrence of cracks by containing tungsten carbide in the weight range described above.

The ratio of the average particle diameter of the primary particles of the tungsten carbide relative to the amorphous carbon may be, for example, in a range of 1.1 to 5. The average particle diameter of the primary particles may be measured according to the evaluation example described later. The ratio of the average particle diameter of the primary particles of the tungsten carbide to the amorphous carbon may be, in another example embodiment, 1.2 or more, 1.3 or more, 1.4 or more, 1.5 or more, 1.6 or more, 1.7 or more, 1.8 or more or 1.9 or more, or 4.5 or less, 4.0 or less, 3.5 or less, 3.0 or less, 2.5 or less or 2.0 or less.

The average particle diameter of the primary particles of the amorphous carbon may be, for example, in a range of 10 to 100 nm. The average particle diameter of the primary particles of the amorphous carbon may be, in another example embodiment, 20 nm or more, 30 nm or more or 40 nm or more, or 90 nm or less, 80 nm or less, 70 nm or less, 60 nm or less or 50 nm or less.

The average particle diameter of the secondary particles of the amorphous carbon may be, for example, in a range of 150 to 500 nm. The average particle diameter of the secondary particles of the amorphous carbon may be, in another example embodiment, 160 nm or more, 170 nm or more, 180 nm or more, 190 nm or more, 200 nm or more, 210 nm or more, 220 nm or more, 230 nm or more or 240 nm or more, or 450 nm or less, 400 nm or less, 350 nm or less or 300 nm or less.

The Brunauer-Emmett-Teller (BET) specific surface area of the amorphous carbon may be, for example, in a range of 10 to 200 square meters per gram (m²/g). The BET specific surface area of the amorphous carbon in the present specification may be measured by a method according to the evaluation example described later. The specific surface area of the amorphous carbon may be, in another example embodiment, 20 m²/g or more, 30 m²/g or more, or 40 m²/g or more, or 50 m²/g or less, 150 m²/g or less, 100 m²/g or less, 70 m²/g or less, or 60 m²/g or less.

The amorphous carbon may be, for example, one or more selected from the group consisting of carbon black, acetylene black, furnace black, Ketjen black, and graphene, but is not limited thereto, and any amorphous carbon that may be used in an anodeless all-solid-state battery, may be used without limitation.

The anodeless coating layer of the present disclosure may be characterized by further including, for example, a lithiophilic element that forms an alloy or a compound with lithium. The lithiophilic element may be, for example, one or more selected from the group consisting of gold (Au), platinum (Pt), palladium (Pd), silicon (Si), silver (Ag), aluminum (Al), bismuth (Bi), tin (Sn) and zinc (Zn).

The particle diameter of the lithiophilic element may be, for example, in the range of 10 to 1000 nm. The particle diameter may mean a maximum particle diameter, a minimum particle diameter, or an average particle diameter, and may mean the particle diameter of primary particles and/or secondary particles. The particle diameter of the lithiophilic element may be, in another example embodiment, 20 nm or more, 30 nm or more, 40 nm or more, or 50 nm or more, or 500 nm or less, 400 nm or less, 300 nm or less, 200 nm or less, or 100 nm or less.

The anodeless coating layer of the present disclosure may further include, for example, a binder. As the binder, for example, an aqueous binder, an organic binder, or a combination thereof may be used. The binder may be, for example, polyvinyl alcohol, carboxymethyl cellulose, hydroxypropyl cellulose, diacetyl cellulose, polyvinylidene fluoride, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, an epoxy resin, nylon or a combination thereof. As the aqueous binder, for example, styrene butadiene rubber, carboxymethyl cellulose or a combination thereof may be used. As the organic binder, for example, polytetrafluoroethylene, polyvinylidene fluoride, or a combination thereof may be used.

In the anodeless coating layer of the present disclosure, the binder may be included, for example, in a range of 0.1 to 20 parts by weight relative to 100 parts by weight of the amorphous carbon. The weight ratio may be a value calculated based on a dry weight. In another example embodiment, the binder may be included in an amount of 0.5 parts by weight or more, 1 part by weight or more, 1.5 parts by weight or more, 2 parts by weight or more, 2.5 parts by weight or more, 3 parts by weight or more, 3.5 parts by weight or more, 4 parts by weight or more, 4.5 parts by weight or more, 5 parts by weight or more, 5.5 parts by weight or more, 6 parts by weight or more, or 6.5 parts by weight or more, or 18 parts by weight or less, 16 parts by weight or less, 14 parts by weight or less, 12 parts by weight or less, 10 parts by weight or less, or 8 parts by weight or less relative to 100 parts by weight of the amorphous carbon.

The anodeless coating layer of the present disclosure may further include, for example, a solvent. In this specification, the meaning that the anodeless coating layer further includes a solvent may mean that a solvent is used in the process of manufacturing the anodeless coating layer, and may not mean that the anodeless coating layer finally manufactured through drying and so on, contains a solvent. Water, N-methylpyrrolidone (NMP) and so on may be used as the solvent.

The anodeless coating layer of the present disclosure may further include, for example, other additives. As the other additives, fillers, coating agents, dispersants, ion-conductive assistants and so on, used in the common all-solid-state batteries may be used without limitation, as long as they do not hinder the purpose of the present disclosure.

The anodeless coating layer of the present disclosure may be manufactured, for example, by applying a slurry in which materials constituting the anodeless coating layer are dispersed onto a negative electrode current collector and drying same.

The thickness of the anodeless coating layer of the present disclosure may be 50 percent (%) or less, 40% or less, 30% or less, 20% or less, 10% or less, or 5% or less of the thickness of the positive electrode active material layer described below. The thickness of the anodeless coating layer may be, for example, in a range of 1 to 20 micrometers (µm), 5 to 18 µm, or 9 to 15 µm. By controlling the thickness of the anodeless coating layer as described above, lithium dendrite formed on one side of the anodeless coating layer, or between the anodeless coating layer and the negative electrode current collector described later, may be controlled to prevent the anodeless coating layer from collapsing, thereby improving the cycle characteristics, improving the energy density, and reducing the internal resistance of an all-solid-state battery.

The anodeless coating layer of the present disclosure may have, for example, a porosity in the range of 50 to 80%. The porosity of the anodeless coating layer may be measured in a manner according to the evaluation example described later. The porosity of the anodeless coating layer may be, in another example embodiment, 52% or more, 54% or more, 56% or more, or 58% or more, or 75% or less, 70% or less, or 65% or less.

Another aspect of the present disclosure relates to an all-solid-state battery.

Unless specifically stated otherwise, matters relating to the aspect of the present disclosure may be equally applied to matters relating to another aspect.

In this specification, an "all-solid-state battery" may mean an all-solid-state secondary battery, and may also be referred to as a cell, a secondary battery, or a battery.

The present disclosure relates to an all-solid-state battery using lithium or a lithium alloy as a negative electrode active material, and may be an all-solid-state battery characterized in including a positive electrode, a solid electrolyte layer, the anodeless coating layer according to the aspect, and a negative electrode.

The positive electrode may include, for example, a positive electrode active material layer. The positive electrode active material layer may be characterized in including, for example, one or more positive electrode active materials selected from the group consisting of a lithium transition metal oxide, nickel sulfide, copper sulfide, lithium sulfide, iron oxide, and vanadium oxide. The lithium transition metal oxide may be lithium cobalt oxide (LCO), lithium nickel oxide, lithium nickel cobalt oxide, lithium nickel cobalt aluminum oxide (NCA), lithium nickel cobalt manganese oxide (NCM), lithium manganate, lithium iron phosphate, or a combination thereof. The positive electrode active material is not limited thereto, and any positive electrode active materials used in the relevant technical field may be used. The positive electrode active materials may be used alone or in a mixture type of two or more thereof.

The lithium transition metal oxide may be, for example, a compound represented by any one among the formulas of: LiₐA_{1-b}B_{b}D₂ (where 0.90≤a≤1 and 0≤b≤0.5); LiₐNi_{1-b-c}Co_{b}B_{c}O_{2-α}F₂ (where 0.90≤a≤1, 0≤b≤0.5, 0≤c≤0.05 and 0<α<2); LiₐNi_{1-b-c}Mn_{b}B_{c}D_{α} (where 0.90≤a≤1, 0≤b≤0.5, 0≤c≤0.05 and 0≤α≤2); LiₐNi_{1-b-c}Co_{b}B_{c}D_{α} (where 0.90≤a≤1, 0≤b≤0.5, 0≤c≤0.05 and 0<α≤2); LiₐE_{1-b}B_{b}O_{2-c}D_{c} (where 0.90≤a≤1, 0≤b≤0.5 and 0≤c≤0.05); LiE_{2-b}B_{b}O_{4-c}D_{c} (where 0≤b≤0.5 and 0≤c≤0.05); LiₐNi_{1-b-c}Co_{b}B_{c}O_{2-α}F_{α} (where 0.90≤a≤1, 0≤b≤0.5, 0≤c≤0.05 and 0<α<2); LiₐCoG_{b}O₂ (where 0.90≤a≤1 and 0.001≤b≤0.1); LiₐMnG_{b}O₂ (where 0.90≤a≤1 and 0.001≤b≤0.1); LiₐMn₂G_{b}O₄ (where 0.90≤a≤1 and 0.001≤b≤0.1); LiₐNi_{1-b-c}Mn_{b}B_{c}O_{2-α}F_{α} (where 0.90≤a≤1, 0≤b≤0.5, 0≤c≤0.05 and 0<α<2); LiₐNi_{1-b-c}Mn_{b}B_{c}O_{2-α}F₂ (where 0.90≤a≤1, 0≤b≤0.5, 0≤c≤0.05 and 0<α<2); LiₐNi_{b}E_{c}G_{d}O₂ (where 0.90≤a≤1, 0≤ b≤0.9, 0≤c≤0.5 and 0.001≤d≤0.1); LiₐNi_{b}Co_{c}Mn_{d}GₑO₂ (where 0.90≤a≤1, 0≤b≤0.9, 0≤c≤0.5, 0≤d≤0.5 and 0.001≤e≤0.1); LiₐNiG_{b}O₂ (where 0.90≤a≤1 and 0.001≤b≤0.1.); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄. In the compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added to the surface of the above-described compound may be used as the positive electrode active material, or a mixture of the above-described compound and the compound having a coating layer added thereto may be used. The coating layer added to the surface of the compound may contain, for example, a lithium ion conductive oxide. The lithium ion conductive oxide may include, but is not limited to, LiNbO₃, Li₄Ti₅O₁₂, Li₃PO₄ or the like. The compound forming the coating layer may be amorphous or crystalline. A method of forming a coating layer may consider, for example, a spray coating method, a dipping method or the like, but may be selected without limitation within a range that does not adversely affect the physical properties of the positive electrode active material.

If the positive electrode active material is, for example, a ternary lithium transition metal oxide including nickel (Ni), such as NCA and NCM, it may be possible to increase the capacity density of the all-solid-state battery and reduce the metal elution of the positive electrode active material in a charged state. Accordingly, the cycle characteristics of the all-solid-state battery in a charged state may be improved.

The shape of the positive electrode active material may be, for example, a particle shape such as a sphere or an elliptical sphere. The particle diameter of the positive electrode active material is not particularly limited, and may be within a range applicable to positive electrode active materials of general all solid secondary batteries. The content of the positive electrode active material of the positive electrode is not particularly limited, and may be within a range applicable to positive electrodes of general all-solid-state secondary batteries.

The positive electrode active material layer may further include, for example, a solid electrolyte, a binder, and/or a conductive material.

The solid electrolyte included in the positive electrode active material layer may be, for example, the same as or different from the solid electrolyte included in the solid electrolyte layer. The solid electrolyte included in the positive electrode active material layer may be, for example, a sulfide-based solid electrolyte, an oxide-based solid electrolyte, or a halide-based solid electrolyte, but is not limited thereto, and may be any electrolyte commonly used in all-solid-state batteries.

The sulfide-based solid electrolyte may be one or more selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂- LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn, or Ga), Li₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2). The sulfide-based solid electrolyte may be prepared by, for example, treating starting materials such as Li₂S and P₂S₅, using a melting rapid cooling method or mechanical milling method. In addition, after the treatment, heat treatment may be performed. The solid electrolyte may be amorphous, crystalline, or a mixture state thereof. In the present disclosure, the sulfide-based solid electrolyte may include, for example, at least sulfur (S), phosphorus (P), and lithium (Li) as constituent elements among the above-described sulfide-based solid electrolyte material.

The sulfide-based solid electrolyte may be, for example, an argyrodite-type compound including one or more selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In particular, the sulfide-based solid electrolyte may be an argyrodite-type compound including one or more selected from Li₆PS₅Cl, Li₆PS₅Br and Li₆PS₅I.

The density of the argyrodite-type solid electrolyte may be, for example, 1.5 to 2.0 grams per cubic centimeter (g/cc). Since the argyrodite-type solid electrolyte has a density of 1.5 g/cc or more, the internal resistance of the all-solid-state secondary battery may be reduced, and the penetration of the solid electrolyte by Li may be effectively suppressed.

The oxide-based solid electrolyte may be, for example, one or more of a garnet-type solid electrolyte, a Nasicon (Na super ionic conductor)-type solid electrolyte, a LISICON (Li super ionic conductor)-type solid electrolyte, or a perovskite-type solid electrolyte. Particularly, as the oxide-based solid electrolyte, Li₇La₃Zr₂O₁₂, Li₇La₃Zr₂O₁₂ doped with elements such as Al, Y, Ga, Ta and Nb instead of Li, or Li₇La₃Zr₂O₁₂ multi-doped with Ga⁺³-Sc⁺³ at the element sites of Li, La and Zr; coated ones thereof, in which the surfaces thereof are coated with materials such as Al₂CO₃, Ge and ZnO; Na₁₊ₓZr₂Si₂P_{3-X}O₁₂ (0≤x≤3), LiM₂(PO₄)₃ (M = Zr, Ti, Ge), Li₁₊ₓAlₓM₂₋ₓ(PO₄)₃ (0<x<2, M=Zr, Ti, Ge), or those doped with atoms having an oxidation number of +3 such as Y, La and Sc, or doped with atoms having an oxidation number of +2 such as Sr, Mg and Ca instead of Al; xLi₃AO₄₋(1-x) Li₄BO₄ (A: P, As, V or the like, and B: Si, Ge, Ti or the like) or those to which Li₃BO₃ or the like is added; or Li₃ₓLa_{2/3-x}□_{1/3- 2x}TiO₃ (lithium lanthanum titanate (LLTO), 0<x<0.16, and □ is vacancy), La_{0.57-2x/3}SrₓLi_{0.3}TiO₃ or the like may be used, without limitation.

As the halide-based solid electrolyte, Li₂ZrCl₆, Li₂₊ₓZr₁₋ₓMₓCl₆ (M= Fe, Cr, V) and Na₂ZrCl₆ may be used, but are not limited thereto.

The solid electrolyte included in the positive electrode active material layer may have, for example, a smaller average particle diameter than that of the solid electrolyte included in the solid electrolyte layer. For example, the average particle diameter of the solid electrolyte included in the positive electrode active material layer may be 90% or less, 80% or less, 70% or less, 60% or less, 50% or less, 40% or less, 30% or less, or 20% or less of the average particle diameter of the solid electrolyte included in the solid electrolyte layer.

The binder included in the positive electrode active material layer may be one or more selected from, for example, acrylonitrile butadiene rubber (ABR), butadiene rubber (BR), styrene butadiene rubber (SBR), polytetrafluoroethylene, polyvinylidene fluoride, polyethylene, etc.

The conductive material included in the positive electrode active material layer may be characterized in being, for example, one or more selected from the group consisting of graphite; carbon black such as acetylene black, Ketjen black, channel black, furnace black, lamp black and thermal black; and carbon fiber.

In addition to the positive electrode active material layer, additives, for example, fillers, coating agents, dispersants, and ion-conductive assistants may be further included, and the additives may be used without limitation as long as they are known materials generally used in the electrodes of all-solid-state batteries.

The positive electrode may further include, for example, a positive electrode current collector. As the positive electrode current collector, a known metal that may be used as the current collector of an all-solid-state battery may be used. The positive electrode current collector may use, for example, a plate, a mesh, or a foil, composed of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The positive electrode current collector may be omitted in some cases.

In addition to the aforementioned configurations, the positive electrode may further include known configurations that may be included in a positive electrode in an all-solid-state battery.

The solid electrolyte layer may include, for example, one or more of the solid electrolytes that may be included in the aforementioned positive electrode active material layer. From the viewpoint of achieving excellent ion conductivity and high energy density, the solid electrolyte layer may be characterized by including, for example, a sulfide-based solid electrolyte.

The solid electrolyte layer may include, for example, a binder. The binder included in the solid electrolyte layer may be, for example, one of the types of binders included in the positive electrode active material layer, but is not limited thereto, and any binder used in the relevant technical field may be used. The binder included in the solid electrolyte layer may be the same as or different from the binder included in the aforementioned positive electrode active material layer and/or the anodeless coating layer.

The solid electrolyte layer may be characterized by having, for example, a thickness of 10 to 100 µm. The solid electrolyte layer may have, in another example embodiment, a thickness of, but is not limited to, 20 µm or more, 30 µm or more, or 40 µm or more, or 90 µm or less, 80 µm or less, 70 µm or less, or 60 µm or less. The negative electrode may include, for example, a negative electrode current collector. The negative electrode current collector may use a known metal that may be used as the current collector of an all-solid-state battery. The negative electrode current collector may use, for example, a material that does not form an alloy or a compound with lithium. As the negative electrode current collector, for example, a material selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), and stainless steel may be used, but is not limited thereto, and any material used as an electrode current collector in the relevant technical field may be used as long as it does not hinder the purpose of the present disclosure. The negative electrode current collector may be composed of one of the above-described metals, or may be composed of an alloy or a coating material of two or more metals thereof. The negative electrode current collector may be, for example, in the form of a plate, mesh, or foil, but is not limited thereto.

The negative electrode of the present disclosure may further include, for example, a thin film including an element capable of forming an alloy with lithium on the negative electrode current collector. The thin film may be included between the negative electrode collector and the anodeless coating layer, or on the surface of the anodeless coating layer opposite to the solid electrolyte layer among both sides. The element capable of forming an alloy with lithium may be, for example, gold, silver, zinc, tin, indium, silicon, aluminum, bismuth and so on, but is not limited thereto, and any element capable of forming an alloy with lithium in the relevant technical field may be used. The thin film may be composed of one of the above illustrations, or may be composed of various types of alloys.

The thickness of the thin film may be, for example, 1 to 800 nm, 10 to 700 nm, 50 to 600 nm, or 100 to 500 nm. The thin film may be formed by, for example, a vacuum deposition method, a sputtering method, a plating method and so on, but is not limited thereto, and any method capable of forming a thin film in the relevant technical field may be used.

The all-solid-state battery of the present disclosure may further include a metal and/or a metal layer thereof, including lithium or a lithium alloy by charging, for example, between the negative electrode current collector and the anodeless coating layer, on one side of the anodeless coating layer opposite to the solid electrolyte layer, and/or within the anodeless coating layer. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy and so on, but is not limited thereto, and any lithium alloy used in the relevant technical field may be used. The metal or metal layer, included between the negative electrode current collector and the anodeless coating layer, and/or within the anodeless coating layer may be composed of one of the alloys or lithium, or may be composed of multiple types of alloys.

The thickness of the metal layer including lithium or a lithium alloy may be, for example, in the range of 1 to 1000 µm, 1 to 500 µm, 1 to 200 µm, 1 to 150 µm, 1 to 100 µm, or 1 to 50 µm. The thickness is to be controlled as described above so that the metal layer may perform a role as a lithium storage and may improve cycle characteristics.

The metal layer may be formed via precipitation between the negative electrode current collector and the anodeless coating layer, or on the surface opposite to the solid electrolyte layer among both sides of the anodeless coating layer, for example, by charging after assembling the all-solid-state battery. In the case where the metal layer is formed by charging after assembling the all-solid-state battery, the region between the negative electrode current collector and the anodeless coating layer, or on the surface opposite to the solid electrolyte layer among both sides of the anodeless coating layer, may be, for example, a lithium-free region that does not include lithium in the initial state or after discharge state of the all-solid-state battery.

The all-solid-state battery of the present disclosure may be characterized by having, for example, a capacity retention of 90% or more after 80 cycles as a result of life characteristic evaluation. In the present specification, the life characteristic evaluation may be performed in a manner according to the evaluation example described later. In another example embodiment, the all-solid-state battery of the present disclosure may be characterized by having a capacity retention after 80 cycles of 90.5% or more, 91% or more, 91.5% or more, 92% or more, 92.5% or more, 93% or more, 93.5% or more, 94% or more, 94.5% or more, 95% or more, or 95.5% or more, or 99.5% or less, 99% or less, 98.5% or less, 98% or less, 97.5% or less, 97% or less, 96.5% or less, or 96% or less as a result of life characteristic evaluation.

The all-solid-state battery of the present disclosure may be characterized by having, for example, a capacity of 175 milliampere-hours per gram mass (mAh/g) or more after 80 cycles as a result of life characteristic evaluation. In another example embodiment, the all-solid-state battery of the present disclosure may be characterized by having a capacity of 300 mAh/g or less, 250 mAh/g or less, or 200 mAh/g or less after 80 cycles as a result of life characteristic evaluation.

Hereinafter, the present disclosure will be described in detail by way of examples in order to specifically explain the disclosure of the present disclosure as described above and the intended functions and effects of the present disclosure. However, the examples may be modified in various other forms, and the scope of the present specification is not construed as being limited to the examples. It is emphasized that the examples are provided to more specifically explain the present disclosure to those skilled in the art.

### Example

### (Formation of Anodeless Coating Layer)

Amorphous carbon, tungsten carbide, a binder, and an N-methyl-2-pyrrolidone (NMP) solution were put in a mixer (THINKY Corporation) container and mixed 12 times for 3 minutes at 2000 revolution per minute (rpm). Then, after additionally adding the NMP solution, a slurry obtained by mixing 5 times for 3 minutes at 2000 rpm was coated on a steel use stainless (SUS) foil having a thickness of 10 µm using a bar coater, dried in the air at 80°C for 20 minutes, and then vacuum-dried at 100°C for 12 hours. As a result, an anodeless coating layer having a thickness of 10 µm and a porosity of 60% formed on the SUS foil was obtained.

In this case, carbon black having an average primary particle diameter of 41 nm and a BET specific surface area of 51 m²/g was used as the amorphous carbon, tungsten carbide having an average particle diameter of 80 nm was used as the tungsten carbide, and polyvinylidene fluoride (PVdF) (solid content of 7 wt%) was used as the binder. In addition, in the anodeless coating layer, the tungsten carbide was included in 33 parts by weight, and the binder was included in 7 parts by weight relative to 100 parts by weight of amorphous carbon (based on dry weight).

### (Positive Electrode)

LiNi_{0.8}Co_{0.15}Mn_{0.05}O₂ (NCM) as a positive electrode active material, Li₆PS₅Cl, an argyrodite-type crystal as a solid electrolyte, carbon nanofibers (CNF) as a conductive material, and polytetrafluoroethylene (Teflon binder, DuPont) as a binder were prepared. Then, the materials were mixed in a weight ratio of positive electrode active material: solid electrolyte: conductive material: binder = 84:15:0.2:1.2, and then the mixture was formed into a large sheet shape to produce a positive electrode sheet. Then, the positive electrode sheet was pressed onto an 18 µm thick aluminum foil to produce a positive electrode.

The initial charge capacity (charge capacity at the 1st cycle) of the manufactured positive electrode was approximately 20 milliampere-hours (mAh) at 4.25 volts (V) charge, and the weight of the positive electrode was approximately 110 milligrams (mg) (approximately 203 mAh/g per active material weight).

### (Solid Electrolyte Layer)

A solid electrolyte layer containing Li₆PS₅Cl solid electrolyte was used.

### (All-solid-state Battery)

The positive electrode, the solid electrolyte layer, the anodeless coating layer, and a negative electrode current collector were stacked and sealed in a pouch under a vacuum state to manufacture an all-solid-state battery. In this case, the thickness of the solid electrolyte layer was 50 µm. Meanwhile, in order to maintain the vacuum of the battery, each part of the positive electrode current collector and the negative electrode current collector was protruded out of the pouch, and the protrusions were used as positive and negative electrode terminals. Then, the all-solid-state battery was subjected to a hydraulic treatment at 500 megapascals (MPa) for 30 minutes. By performing this hydrostatic treatment, the characteristics as a battery are greatly improved.

### Comparative Example 1

An all-solid-state battery was obtained in the same manner as in the Example except that tungsten carbide was not added during manufacturing the anodeless coating layer.

### Comparative Example 2

An all-solid-state battery was obtained in the same manner as in the Example except that silicon carbide was used instead of tungsten carbide during manufacturing the anodeless coating layer. In this case, the silicon carbide having an average particle diameter of 80 nm was used.

### Evaluation Example 1. Average Particle Diameters of Tungsten Carbide, Silicon Carbide and Amorphous Carbon

The average particle diameters of the first particles of tungsten carbide, silicon carbide, and amorphous carbon were measured using a scanning electron microscope (SEM, FEI sirion), and the average particle diameter of the secondary particles of amorphous carbon was measured using a particle size analyzer (Beckman Coulter LS13 320).

### Evaluation Example2. Specific Surface Area of Amorphous Carbon

The specific surface area of amorphous carbon was measured according to the commonly used BET method (a Brunauer, Emmett, and Teller's method). Specifically, the specific surface area of amorphous carbon was measured by measuring the adsorption amount of N₂ gas at 77 degrees Kelvin (K) using a Micromeritics, ASAP 2400 device after out-gassing each sample at 298°K until the residual pressure of each sample became 10⁻³ torr for about 6 hours, and the surface adsorption properties of carbon black were derived by the development of micropores with S_{BET} and analyzing mesopores as a result of S_{BJH}.

### Evaluation Example 3. Cell Life Characteristics

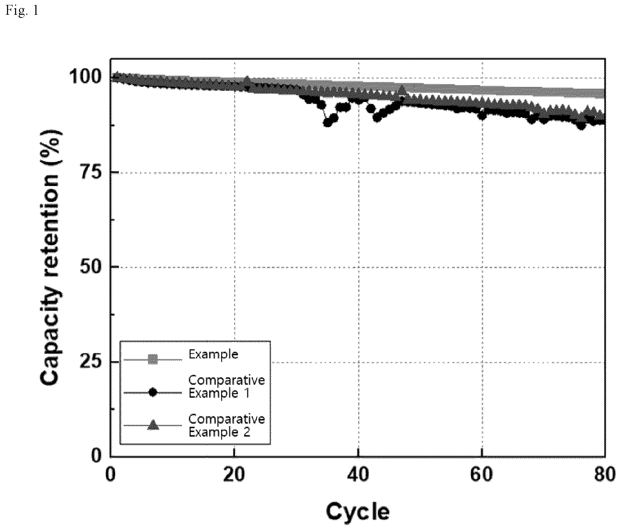

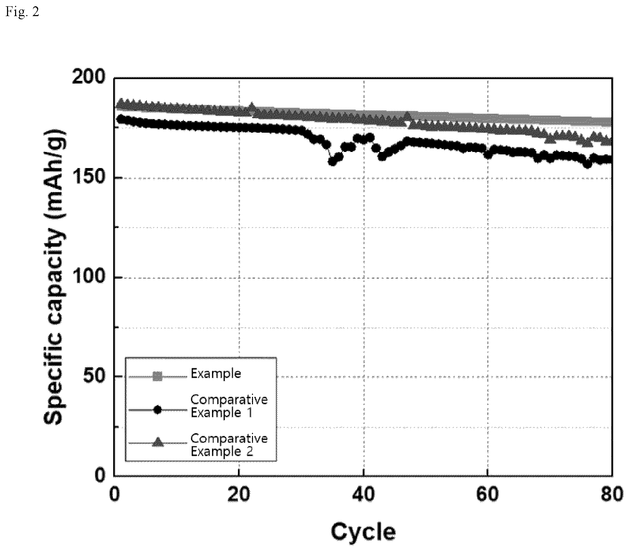

The all-solid-state batteries (pouch-type monocells) of the Example and Comparative Examples were driven at an operating voltage range of 4.25 volts (V)-3.0 V and an operating temperature of 60°C under the charge and discharge conditions below to evaluate the cycle characteristics, and the results are shown in FIGS. 1 and 2.
Charge conditions: 0.33 coulomb (C), 4.25 V constant current (CC)/constant voltage (CV), 0.1 C cut-off
Discharge conditions: 0.33 C, 3.0 V, CC

As a result, in the case of the Example in which the anodeless coating layer includes tungsten carbide within a predetermined range, it was found that the specific capacity was large and the cycle retention according to cycles were also excellent compared to the Comparative Example 1 or 2, which did not include tungsten carbide or replaced tungsten carbide with silicon carbide. In particular, it was confirmed that the specific capacity and capacity retention characteristics of Comparative Example 1 or 2 were markedly deteriorated as the cycle was repeated, while the Example had excellent characteristics compared thereto. In particular, in the case of Comparative Example 2, as silicon carbide is introduced, Li and silicon carbide combine to form a LiₓSi_{y}C phase, and the phase causes volume expansion of the electrode, whereas in the case of the Example, it is expected that tungsten carbide has the effect of improving Li ion conductivity without reacting with Li to form a phase, to exhibit the results.

## Claims

1. An anodeless coating layer used in a secondary battery using lithium or a lithium alloy as a negative electrode active material, wherein the anodeless coating layer comprises amorphous carbon and tungsten carbide.

2. The anodeless coating layer according to claim 1, wherein an average particle diameter of primary particles of the tungsten carbide is 150 nanometers (nm) or less.

3. The anodeless coating layer according to claim 1, wherein the tungsten carbide is comprised in 10 to 50 parts by weight relative to 100 parts by weight of the amorphous carbon.

4. The anodeless coating layer according to claim 1, wherein a ratio of an average particle diameter of primary particles of the tungsten carbide to the amorphous carbon is in a range of 1.1 to 5.

5. The anodeless coating layer according to claim 1, further comprising a lithiophilic element forming an alloy or a compound with lithium.

6. An all-solid-state battery using lithium or a lithium alloy as a negative electrode active material, wherein the all-solid-state battery comprises a positive electrode, a solid electrolyte layer, the anodeless coating layer according to claim 1, and a negative electrode.

7. The all-solid-state battery according to claim 6, wherein the positive electrode comprises a positive electrode active material layer, and the positive electrode active material layer comprises one or more positive electrode active materials selected from the group consisting of a lithium transition metal oxide, nickel sulfide, copper sulfide, lithium sulfide, iron oxide and vanadium oxide.

8. The all-solid-state battery according to claim 6, wherein the solid electrolyte layer comprises a sulfide-based solid electrolyte.

9. The all-solid-state battery according to claim 8, wherein the sulfide-based solid electrolyte is one or more selected from Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂- LiₚMO_{q} (p and q are positive numbers, and M is one of P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn, or Ga), Lᵢ₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

10. The all-solid-state battery according to claim 6, wherein a thickness of the solid electrolyte layer is 10 to 100 micrometers (µm).

11. The all-solid-state battery according to claim 6, wherein a porosity of the anodeless coating layer is in a range of 50 to 80 percent (%).

12. The all-solid-state battery according to claim 6, wherein, as a result of life characteristic evaluation, a capacity retention after 80 cycles is 90% or more.

13. The all-solid-state battery according to claim 6, wherein, as a result of life characteristic evaluation, a capacity after 80 cycles is 175 milliampere-hours per gram mass (mAh/g) or more.
